(19)

**Europäisches Patentamt**

**European Patent Office**

**Office européen des brevets**

(11) **EP 4 675 576 A1**

(12) **EUROPEAN PATENT APPLICATION**

(43) Date of publication:
07.01.2026 Bulletin 2026/02

(21) Application number: 25153785.8

(22) Date of filing: 24.01.2025

(51) International Patent Classification (IPC):
*G06V 20/52* *(2022.01)* *G06V 20/40* *(2022.01)*
*G06N 3/045* *(2023.01)* *G06N 3/098* *(2023.01)*

(52) Cooperative Patent Classification (CPC):
**G06V 20/41; G06N 3/044; G06N 3/045;
G06N 3/098; G06V 20/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.07.2024 US 202463666821 P**

(71) Applicant: **Moksa.ai
Sterling Heights, MI 48312 (US)**

(72) Inventors:
• **Mottu, Kranthi
506330 Telangana (IN)**
• **Verma, Sahil
800008 Bihar (IN)**
• **Rao, Geelapaturu Subrahmanya Venkata Radha
Krishna
600100 Tamil Nadu (IN)**
• **Kolli, Nikhil Teja
Michigan, 48312 (US)**

(74) Representative: **Boult Wade Tennant LLP
Salisbury Square House
8 Salisbury Square
London EC4Y 8AP (GB)**

(54) **SYSTEM AND METHOD FOR GENERATING A FEDERATED LEARNING BASED MODEL FOR IMPROVED VIDEO ANALYTICS**

(57)     A system and method for generating federated learning-based model for improved video analytics is provided. A set of datasets are fetched from an input unit that comprises video data associated with domain stored in the input unit. Features are extracted from the pre-defined number of frames with respect to an event captured in the video frames by employing a pre-trained model on pre-processed video frames. Video data is passed through the pre-trained model to obtain video-specific features in the form of vectors. Video data is clustered with similar underlying distributions in the same cluster. Lastly, parent-child model architecture is generated. Parent model data is initialized for parent model generation by aggregating a first pre-defined percentage of video data from each cluster in stratified manner. The child models are initialized after generating parent model by using weights of the parent model for predicting event associated with the domain.

EP 4 675 576 A1

**Description**

**Field of the invention**

The present invention relates generally to the field of video analytics, and more particularly, to a system and a method for generating a federated learning-based model for improved video analytics.

**Background of the invention**

Video analytics is generally carried out for determining occurrence of an event associated with a particular domain. For example, video analytics may be carried out for determining a theft event that may have occurred in a retail store. In order to carry out video analytics, various types of techniques have been developed and used. One of such techniques is implementing domain specific models which are trained and developed for determining occurrence of the event in a specific domain. However, models developed by employing existing techniques operate inefficiently with respect to new or unseen scenarios and are prone to cold start problem.

Conventionally, the developed models predominantly learn variant features (features specific to a dataset) or spurious relations, while ignoring the invariant features (features that span across multiple datasets), with different underlying distributions, as the variant features are easy to learn. Typically, the models prioritize variant features at the time of inference, which is referred to as an out-of-distribution generalization problem. Data belonging to the particular domain may have different underlying distributions, which prevents the existing models from operating in new or unseen scenarios. Also, in existing systems that employ Generative Adversarial Networks (GAN), data generation for training and model development are highly computation intensive and are prone to errors.

In light of the aforementioned drawbacks, there is a need for generating a federated learning-based model for improved video analytics. Further, there is a need for a system and a method which provides for improved video analytics for efficiently determining occurrence of an event across multiple datasets and domains. Also, there is a need for a system and a method which provides for implementing models for video analytics which perform efficiently on unseen datasets associated with different domains with different underlying distributions.

**Summary of the invention**

In various embodiments of the present invention, a system for generating a federated learning-based model for improved video analytics is provided. The system comprises a memory storing program instructions, a processor executing instructions stored in the memory, and a video analytics model generation engine executed by the processor. The video analytics model generation engine is configured to fetch a set of datasets from an input unit, the datasets comprise video data associated with a domain stored in the input unit. The set of datasets are trimmed to one or more pre-defined number of video frames in order to maintain consistency of the datasets. The video analytics model generation engine is configured to extract features from the pre-defined number of video frames with respect to an event captured in the video frames by employing a pre-trained model on pre-processed video frames, wherein the extracted features are in the form of vector. Further, the video analytics model generation engine is configured to cluster video data represented in the pre-defined number of video frames with similar underlying distributions in a same cluster based on the extracted features. Lastly, the video analytics model generation engine is configured to generate a parent-child model architecture based on the clustered video data. Parent model data is initialized for parent model generation by aggregating a first pre-defined percentage of video data from each cluster in a stratified manner. The one or more child models are initialized after generating the parent model by using weights of the parent model for predicting the event associated with the domain.

In various embodiments of the present invention, a method for generating a federated learning-based model for improved video analytics is provided. The method is implemented by a processor executing instructions stored in a memory. The method comprises fetching a set of datasets from an input unit, the datasets comprise video data associated with a domain stored in the input unit. The set of datasets are trimmed to one or more pre-defined number of video frames in order to maintain consistency of the datasets. The method comprises extracting features from the pre-defined number of video frames with respect to an event captured in the video frames by employing a pre-trained model on pre-processed video frames, wherein the extracted features are in the form of vectors. The method comprises clustering video data represented in the pre-processed video frames with similar underlying distributions in the same cluster. based on the extracted features. Lastly, the method comprises generating a parent-child model architecture based on the clustered video data. Parent model data is initialized for parent model generation by aggregating a first pre-defined percentage of video data from each cluster in a stratified manner. The one or more child models are initialized after generating the parent model by using weights of the parent model for predicting the event associated with the domain.

## Brief description of the accompanying drawings

The present invention is described by way of embodiments illustrated in the accompanying drawings wherein:

FIG. 1 is a detailed block diagram of a system for generating a federated learning-based model for improved video analytics, in accordance with an embodiment of the present invention;

FIG. 2 illustrates a dendrogram depicting hierarchical clustering, in accordance with an embodiment of the present invention;

FIGs. 3A-3D illustrate graphical representations of cluster formations, in accordance with an embodiment of the present invention;

FIGs. 4 and 4A illustrates a flowchart depicting a method for generating a federated learning-based model for improved video analytics, in accordance with an embodiment of the present invention; and

FIG. 5 illustrates an exemplary computer system in which various embodiments of the present invention may be implemented.

## Detailed description of the invention

The present invention discloses a system and a method which provides for generating a federated learning-based model for improved video analytics for efficiently determining occurrence of an event across different domains. The present invention provides for executing a federated learning-based approach by employing an adaptive weight transfer technique for Out-of-Distribution (OOD) generalization problem resolution. The present invention discloses a system and a method which provides for using a knowledge distillation technique within a federated learning framework for anomaly detection in a child-parent model architecture. Further, the present invention discloses a system and a method which provides for model generation such that the model learns invariant features associated with multiple datasets used for training of the model. Furthermore, the present invention discloses a system and a method which provides for training the generated model on different datasets with different underlying distributions.

The disclosure is provided in order to enable a person having ordinary skill in the art to practice the invention. Exemplary embodiments herein are provided only for illustrative purposes and various modifications will be readily apparent to persons skilled in the art. The general principles defined herein may be applied to other embodiments and applications without departing from the scope of the invention. The terminology and phraseology used herein is for the purpose of describing exemplary embodiments and should not be considered limiting. Thus, the present invention is to be accorded the widest scope encompassing numerous alternatives, modifications, and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

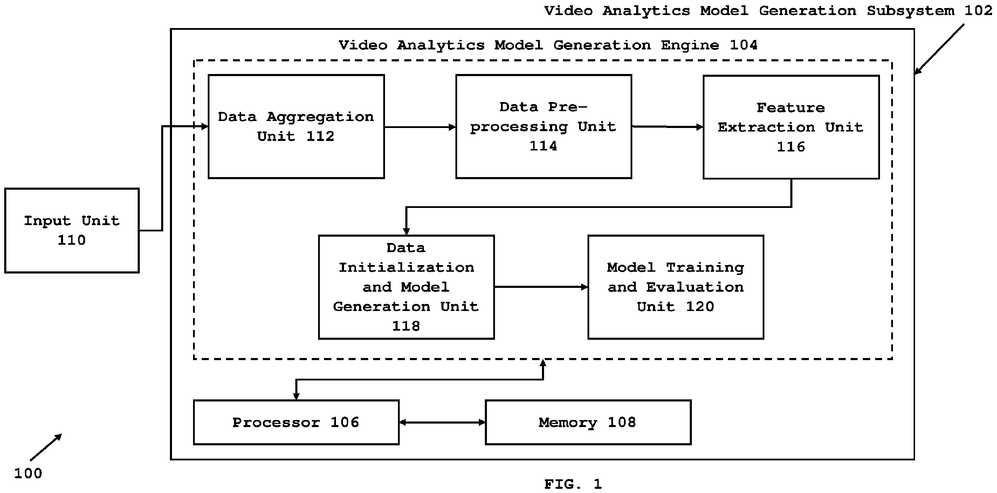

FIG. 1 is a detailed block diagram of a system 100 for generating a federated learning-based model for improved video analytics, in accordance with various embodiments of the present invention. Referring to FIG. 1, in an embodiment of the present invention, the system 100 comprises a video analytics model generation subsystem 102 and an input unit 110. In an exemplary embodiment of the present invention, the input unit 110 includes, but is not limited to, databases, and data sources located at different locations. The subsystem 102 and the input unit 110 are connected to each other via a communication channel (not shown). The communication channel (not shown) may include, but is not limited to, a physical transmission medium, such as, a wire, or a logical connection over a multiplexed medium, such as, a radio channel in telecommunications and computer networking. Examples of radio channel in telecommunications and computer networking may include, but are not limited to, a Local Area Network (LAN), a Metropolitan Area Network (MAN) and a Wide Area Network (WAN).

In an embodiment of the present invention, the system 100 is configured with a built-in-intelligent mechanism for generating a model architecture by employing a Federated Learning (FL) based approach for improving video analytics. The subsystem 102 implements the FL based approach with an adaptive weight transfer technique for OOD generalization using knowledge distillation and through implementation of knowledge graphs. The subsystem 102 generates a parent-child model architecture in which multiple child models are connected to a parent model and the multiple child models are trained on invariant features and variant features associated with different datasets with different distributions, thereby the connected parent model is trained on invariant features as well. Therefore, the subsystem 102 implements a machine learning (ML) technique (i.e., Federated learning (FL)) in which training of the generated parent-child model is carried out by using different datasets fetched from different sources having different distributions simultaneously for solving OOD problem. Further, the subsystem 102 provides an efficient weight sharing strategy for aggregation of weights corresponding to invariant features at the parent model iteratively, and further discards the child specific weights specific to variant features, and an OOD generalized parent model is trained on invariant features.

In an embodiment of the present invention, the subsystem 102 comprises a video analytics model generation engine 104 (engine 104), a processor 106 and a memory 108. The various units of the engine 104 are operated via the processor 106 specifically programmed to execute instructions stored in the memory 108 for executing respective functionalities of the units of the engine 104 in accordance with various embodiments of the present invention.

In an embodiment of the present invention, the engine 104 comprises a data aggregation unit 112, a data pre-processing unit 114, a feature extraction unit 116, a data initialization and model generation unit 118, and a model training and evaluation unit 120.

In operation, in an embodiment of the present invention, the data aggregation unit 112 fetches datasets from multiple locations from the input unit 110. In an exemplary embodiment of the present invention, the datasets comprise one or more videos which are captured using video capturing devices, such as, closed-circuit television (CCTV) cameras or the like from various locations. For example, if an event of theft is required to be addressed in retail stores, then the datasets relate to theft and non-theft videos obtained from CCTV cameras installed in retail stores at various locations. In an exemplary embodiment of the present invention, the input unit 110 includes, but is not limited to, databases, and data sources located at different locations. The datasets are stored in the input unit 110 as a set of datasets and subsequently fetched by the data aggregation unit 112. In an embodiment of the present invention, the data aggregation unit 112 is configured to trim the set of datasets (i.e., videos) to one or more pre-defined number of frames in order to maintain consistency of the datasets in the set of datasets. In an exemplary embodiment of the present invention, the pre-defined number of frames is 150 frames, which is determined from various empirical and experimental studies.

In an embodiment of the present invention, the data pre-processing unit 114 receives the pre-defined number of frames from the data aggregation unit 112 and executes one or more pre-processing techniques on the frames for enhancing robustness of the datasets (video data) associated with the frames. In an embodiment of the present invention, the data pre-processing unit 114 applies a first pre-processing technique including one or more augmentation techniques. The augmentation techniques include, but are not limited to, flipping, contrasting and brightening of the datasets (video data) associated with the frames. In another exemplary embodiment of the present invention, the data pre-processing unit 114 applies a second pre-processing technique including one or more CV2 techniques on the frames along with a masking technique to capture a specific incident present in the frames (e.g., movement of persons in the retail store, etc.), and remove irrelevant data from the frames (e.g., location of the aisles in the retail store, etc.). The CV2 techniques include, but are not limited to, background subtraction, dilation, erosion, and morphological operations.

In an embodiment of the present invention, the feature extraction unit 116 is configured to receive the pre-processed frames from the data pre-processing unit 114. The feature extraction unit 116 firstly implements a pre-trained 3DCNN model (e.g., a Movinet-a3-base model) on the pre-processed frames for extracting features corresponding to video data from the pre-defined number of frames with respect to an event captured in the video frames. For example, the event may include, but is not limited to, theft and non-theft events occurring in one or more of the retail stores at different locations. In an exemplary embodiment of the present invention, a pre-trained 3DCNN model is used for feature extraction, such that each video frame is uniquely represented in a vectorial format. The video data is passed through the pre-trained 3DCNN model to obtain video-specific features in the form of vectors. The vectors uniquely represent the videos, and similar videos have similar features. Further, the pre-trained 3DCNN model consists of a trained frozen feature-extractor part that remains same throughout the video frames. In an embodiment of the present invention, the frozen feature-extractor part is often attached to an edge layer (e.g., a Flatten layer) of the 3D convolution neural network model transforming the features in a 1-Dimensional (1-D) format to be consumed by a classifier. The features extracted by the pre-trained 3DCNN model corresponding to each video frame act as video-specific meta-data which uniquely define a video. For example, since parent model and child models, trained using federated learning technique, are binary classifiers that categorize videos as either theft or non-theft, the parent model and child models are trained on videos containing both theft and non-theft classes.

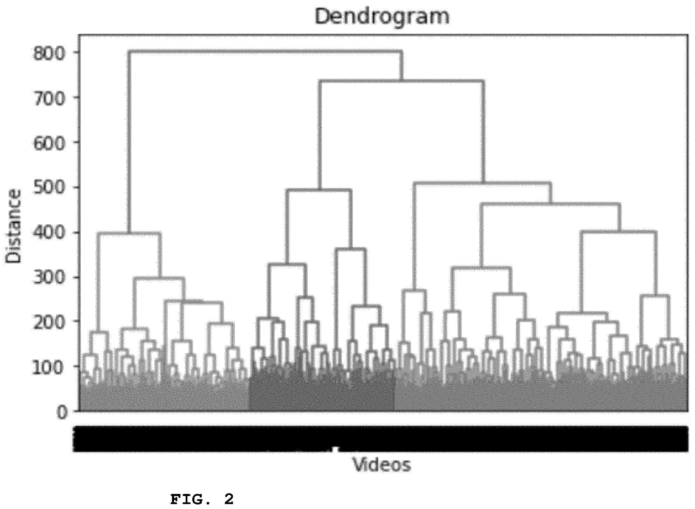

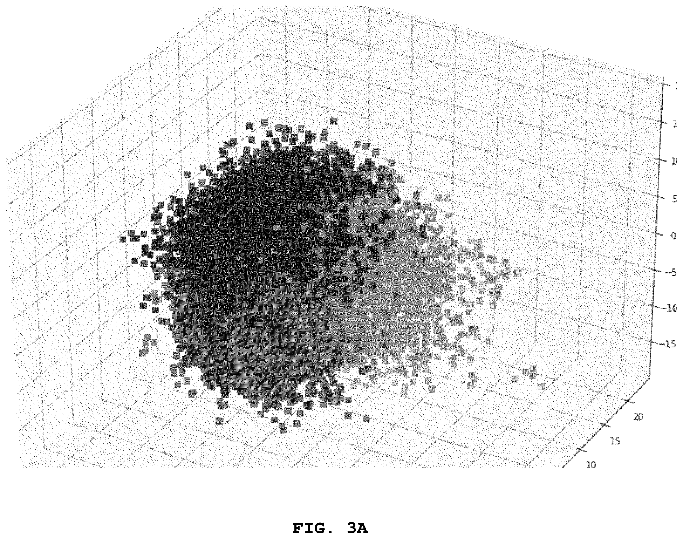

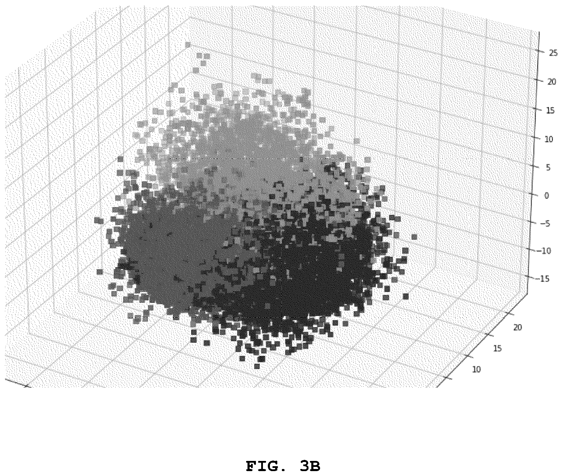

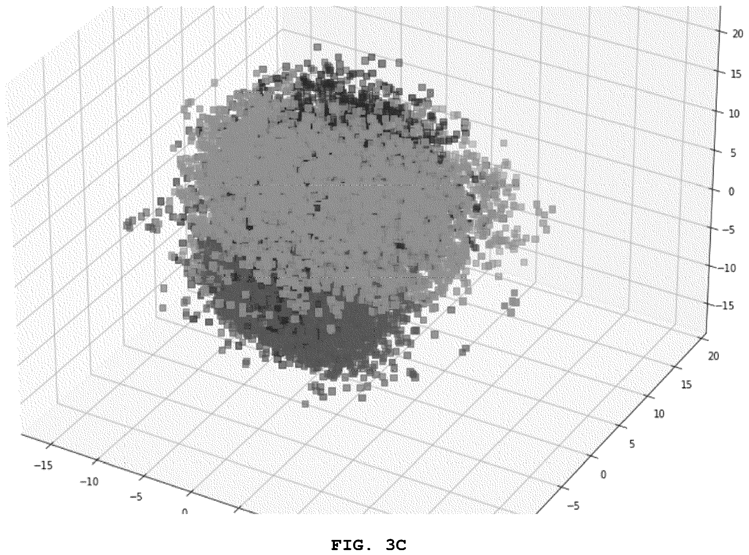

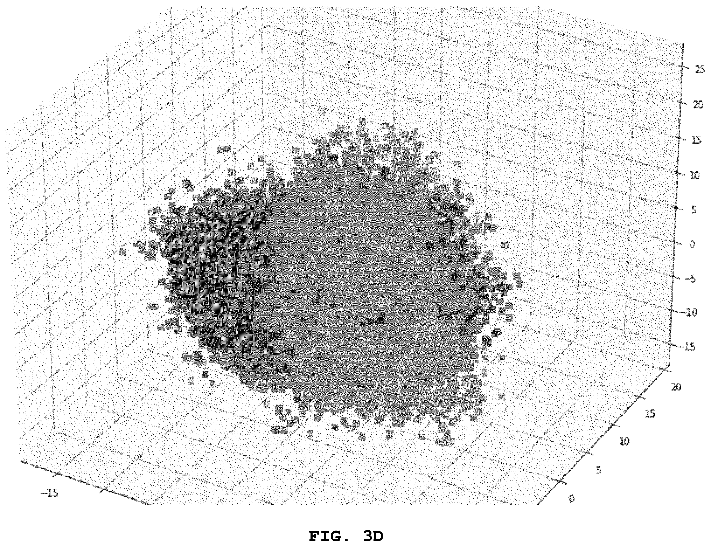

In an embodiment of the present invention, a clustering technique is executed by the feature extraction unit 116 on the vectors to cluster video data with similar underlying distributions in the same cluster. In embodiment of the present invention, the feature extraction unit 116 executes a hierarchical clustering operation (also referred to as agglomerative clustering) for clustering of similar videos in the one or more clusters, such that each cluster belongs to one underlying distribution. In an example, the underlying distributions refer to the pattern of theft, that may vary from store to store depending on their demography, placement of the isles in the shop, etc. The clustering is carried out by extracting video-specific features. The video-specific features are extracted by the deep learning model and are in vectorial form. In an embodiment of the present invention, at least three clusters are generated by the feature extraction unit 116 for clustering of similar video data in the clusters based on the video-specific features. Hierarchical clustering is depicted in the form of a dendrogram in fig. 2, in accordance with an embodiment of the present invention, which is generated by computing linking as ward and affinity between data points in the dendrogram by determining Euclidean distance between the data points. Further, figs. 3A-3D illustrate graphical representations of the formed clusters. In particular, figs. 3A-3D represent the three clusters formed after aggregating all the theft and non-theft videos and implementing a clustering algorithm.

In an embodiment of the present invention, the feature extraction unit 116 computes a silhouette score for evaluating correctness of the clustered video data. If the silhouette score is 1, then the video data in a cluster is well-matched to its own cluster and poorly matches nearby clusters. Further, if the silhouette score is -1, then the video data is in an incorrect cluster. Advantageously, computation of silhouette score determines correctness of clusters by minimizing the number of video data with score less than a pre-determined threshold score of zero.

In an embodiment of the present invention, the data initialization and model generation unit 118 is configured to receive the video data clusters from the feature extraction unit 116. The data initialization and model generation unit 118 processes the video data clusters for generating a domain classifier model by using clusters as target classes. The domain classifier model categorizes each video in either of the 'n' identified clusters or underlying distributions. Therefore, the target classes for the domain classifier are the clusters. The domain classifier model is a deep learning model which is used to determine probability of domain association of a video to a cluster in which the video is clustered. Therefore, each video's domain association is identified by the domain classifier model, such that the learning process of a child model can be regularized, and the child model does not lose confidence if it makes wrong predictions for videos that do not belong to its distribution.

In an embodiment of the present invention, the data initialization and model generation unit 118 generates a parent-child model architecture. The one or more child models in the parent-child model architecture are connected to the parent model. The data initialization and model generation unit 118 generates the parent-child model architecture by firstly initializing parent model data for parent model generation by aggregating a first pre-defined percentage (x%) of video data from each cluster in a stratified manner. The training of the parent model is carried out through the child models, and a pre-determined fraction of overall video data (for example, 25%) from all the distributions collectively is used to train the parent model to initiate training process of the child models. The remaining fraction of the video data is used for keeping a check on the learning process of the parent model by testing the parent model against the rest of the video data at different instances of the federated learning process. The parent model is initialized first based on the aggregated first pre-defined percentage of video data, to prevent the child models from being completely biased towards their respective distributions. In an exemplary embodiment of the present invention, the data initialization and model generation unit 118 generates the parent model by using a time distributed Convolutional Neural Network (CNN) technique along with Convolutional Long-Short Term Memory (Conv-LSTM) technique for extracting one or more spatio-temporal features from the video data simultaneously. In an embodiment of the present invention, the parent model is generated using multiple time-distributed CNN layers of the CNN and Conv-LSTM layers of the Conv-LSTM as the feature extractor and dense layers as the classifier. The convolution layers extract the spatial features that are present in a single frame, while the time-distributed layers extract the temporal features i.e., inter-frame features for activity recognition. Further, Conv-LSTM is used to facilitate the parent model to learn on activities spanning across a large number of frames. In an embodiment of the present invention, the model training and evaluation unit 120 trains the generated parent model based on the first pre-defined percentage (x%) of video data aggregated from each cluster. The trained parent model is associated with weights, which relates to knowledge learned by the parent model.

In an embodiment of the present invention, the data initialization and model generation unit 118 initializes one or more child models after generating the parent model by using the weights of the parent model. The weights of the parent model are transferred to the child models without any changes where the child model has not seen any video data yet. Therefore, the parent model is initialized first based on the aggregated video data to prevent the child models from starting a solution completely biased towards their respective distributions. In an embodiment of the present invention, the child models are generated by training on the knowledge, which is learnt by the parent model and one or more invariant features associated with the knowledge that span across the entire distribution of the video data aggregated from each cluster are used apart from one or more variant features associated with the knowledge specific to their distribution. The data initialization and model generation unit 118 employs a knowledge distillation (KD) technique for transferring knowledge from the parent model to the child models and the data initialization and model generation unit 118 simultaneously checks the distribution specific features learnt by the child models (explained in detail in later part of the specification). In an exemplary embodiment of the present invention, the data initialization and model generation unit 118 uses below mentioned equation for computing weights of each child model:

$$\text{Updated\_Weights(Child\_i)} = (1 - \gamma) * \text{Weights(Child\_i)}$$
$$+ \gamma * (\text{Weights(Parent)} +$$
$$\text{KD\_Gradients(Child\_i, Parent))}$$

As illustrated above, architecture and weights of the generated parent model is used to train the child models.

In an embodiment of the present invention, a federated learning phase is initiated by the model training and evaluation unit 120 by training the one or more generated child models based on an aggregation of a second pre-defined percentage (y%) of video data from each cluster. In an embodiment of the present invention, the model training and evaluation unit 120 is configured to test the trained child models on a third pre-defined percentage (z%) of video data aggregated from each cluster. In another embodiment of the present invention, the model training and evaluation unit 120 determines domain association of the particular video to the cluster in which the video is present by using the third pre-defined percentage (z%) of video data aggregated from each cluster. Testing of the child models is carried out using a fraction of video data belonging to the said domain, which is provided to the trained child model for training and computing a confidence score.

In an embodiment of the present invention, the model training and evaluation unit 120 computes the confidence score for the trained child models by using the below mentioned formula:

$$\text{Confidence score (Child\_i)} = \Sigma \, (\text{Correct Predictions within}$$
$$\text{Domain\_i} * \text{Domain association\_i})/$$
$$\text{Total Predictions\_i}$$

Confidence score represents the confidence of the child model on its own knowledge. The confidence score is computed by using the correct predictions made by the child models for the videos in its own domain. The domain of the videos is identified by the domain classifier.

In an embodiment of the present invention, the model training and evaluation unit 120 employs the generated child models for carrying out a prediction operation for predicting an event associated with a domain (e.g., predicting the event of theft in a retail store). In another embodiment of the present invention, the model training and evaluation unit 120 is configured to carry out a data redistribution operation in clusters for redistributing the videos data in the clusters corresponding to which the child models have made incorrect event predictions. In an example, the child models as well as the domain classifier are tested on the theft and non-theft videos. The video data is placed in a cluster based on the correct prediction made by the child model. If multiple child models make correct predictions, then a domain association value is used to determine clustering of the video data. Therefore, redistribution is carried out to make sure that the child models are learning from the data belonging to their own underlying distribution. In an exemplary embodiment of the present invention, the data redistribution operation is carried out by using the below mentioned instructions:

**For** each child

    **For** each wrong prediction

        **If** domain association is highest for the same cluster data belongs to

            **Continue**

        **Else**

            Pass the data to the cluster having highest domain association

            (only if the domain association is above a threshold, else continue)

Further, the confidence score computation and the data redistribution operation are performed in parallel by the model training and evaluation unit 120.

In an embodiment of the present invention, the model training and evaluation unit 120 computes weights associated with the child models and parent model. In an embodiment of the present invention, the knowledge gained by the child models specific to their distribution is also used by the parent model to determine global knowledge of all the existing distributions. Further, a knowledge distillation loss is used along with the domain classifier to compute weightage of knowledge corresponding to each child models, which is required to be transferred to the parent model. The weightage of the knowledge of the child models and the existing knowledge of the parent model is computed by the model training and evaluation unit 120 to update the parent model by using the below mentioned formula, in accordance with an exemplary embodiment of the present invention:

$$\text{Weightage (Child\_i)} = (\alpha * \text{Confidence(Child\_i)} + \beta *$$
$$\text{KD\_Loss(Child\_i, Parent))} / (1 + \Sigma(\alpha *$$
$$\text{Confidence(Child\_i)} + \beta *$$
$$\text{KD\_Loss(Child\_i, Parent)))}$$

$$\text{Weightage(Parent)} = 1 / (1 + \Sigma(\alpha * \text{Confidence(Child\_i)} +$$
$$\beta * \text{KD\_Loss(Child\_i, Parent)))}$$

In an exemplary embodiment of the present invention, the weightages as mentioned in the above equation are weights that are being computed and does not relate to the weights of the model. The weightages signify the contribution of a model in updating the child model or parent model. For example, if a model is employed with one node in an input layer and two nodes in the output layer, then there will be two edges associated with it, and the model is associated with two weights. Further, if two child models and one parent model are employed on the same architecture, then weights associated with them would be P1, P2 for parent, C11, C12 for child 1 and C21, C22 for child 2. Further, if the weights of the parent model are required to be updated and weightage of parent model is 0.5 and child models are 0.25 each, then the updated weights of the parent model is: P(updated) = (0.5 * P11 + 0.25 * C11 + 0.25 * C21), (0.5 * P12 + 0.25 * C12 + 0.25 * C22). Further, these weightages are calculated using a determination of confidence of the child models.

In an embodiment of the present invention, the model training and evaluation unit 120 is configured to update weights of the parent model by using the below mentioned formula:

$$\text{Updated Weights(Parent)} = \text{Weightage(Parent)} * \text{Weights(Parent)} + \Sigma(\text{Weightage(Child\_i)} * \text{Weights(Child\_i)})$$

The weights of the updated parent model are transferred to the child models corresponding to each cluster. The knowledge gained by the parent model or the child models during federated learning is stored in the form of their weights. As the parent model does not train on the data directly and learns from the knowledge gained by the child models, the knowledge is transferred from the child models in the form of their weights. As such, the knowledge gained by each of the child models may have different importance in the context of the parent model. Therefore, a weightage parameter is used for the knowledge of the child models that have more confidence on their predictions.

In an embodiment of the present invention, the model training and evaluation unit 120 performs testing of the generated parent model by aggregating a fourth pre-defined percentage (t%) of video data from each cluster in a stratified manner to test the parent model with older weights and newer weights. Further, the parent model with the updated weights is tested on the pre-determined fraction of video data from each of the clusters formed and compared against a previous performance. In an embodiment of the present invention, the testing of the generated parent model is carried out based on one or more scenarios. In an embodiment of the present invention, a first scenario includes improvement in overall performance of the parent model after training, but the parent model may be skewed towards particular distributions. Skewness implies that the variant features of some child models are dominant over the invariant features. In order to address the first scenario, the model training and evaluation unit 120 does not update the parent model's weights and the testing of the parent model is carried out with previous weights. In another embodiment of the present invention, a second scenario includes improvement in overall performance of the parent model after training without being skewed. In order to address the second scenario, the model training and evaluation unit 120 tests the parent model with the updated weights. In yet another embodiment of the present invention, a third scenario includes deterioration in overall performance of the parent model, but improvement in skewness. In order to address the third scenario, the model training and evaluation unit 120 uses the updated weights for testing of the parent model, as the updated weights result in improvement of skewness, and therefore the invariant features are learnt using the updated weights. In another embodiment of the present invention, a fourth scenario may include deterioration in overall performance of the parent model as well as increase in skewness. In order to address the fourth scenario, the model training and evaluation unit 120 do not update the parent model's weights and uses previous weights for testing of the parent model.

In an embodiment of the present invention, the model training and evaluation unit 120 is configured to update weights of the generated child models by employing the knowledge distillation (KD) technique and implementing the below mentioned formula:

$$Updated\_Weights(Child\_i) = (1 - \gamma - \eta) * Weights(Child\_i)$$

$$+ \gamma * Weights(Parent)$$

$$+ \eta * Average\_Weights(Child\_Models)$$

where, $\gamma$ and $\eta$ are the hyperparameters.

In an embodiment of the present invention, each child model's weight is updated by the model training and evaluation unit 120 based on determining at least two factors comprising a confidence factor (Child_i) in which a higher confidence in predictions provides a stronger influence on the update (weighted by $\alpha$) and a KD_Loss (Child_i, Parent) in which the Knowledge Distillation (KD) loss between the child model and the parent model contribute to the update (weighted by $\beta$). KD loss leads the child models to learn from the parent model's knowledge. Sum of the weighted contributions for all child models ($\Sigma(\alpha * Confidence(Child\_i) + \beta * KD\_Loss(Child\_i, Parent))$) is used for carrying out a normalization operation. The normalization operation provides a normalized sum for weightage values (Weightage(Child_i)) to 1 for the child models. The child model's weightage (Weightage(Child_i)) is determined by dividing the child models combined confidence and knowledge distillation loss contribution by the normalized sum. The weightage determines the relative influence of each child model on its own update. The parent model's weightage (Weightage(Parent)) is the inverse of the normalized sum used for child models. This ensures that the sum of weightages for all child models and the parent model equals to 1 during the update process. Therefore, the confidence scores are leveraged to emphasize updates for high-confidence child models while incorporating the KD loss to transfer knowledge from the parent model.

In various embodiments of the present invention, the federated learning phase is iteratively repeated until a termination condition is reached. The termination condition represents pre-defined number of iterations for which the federated learning phase is executed. Accordingly, the generated parent model learns from the child models and *vice-a-versa*.

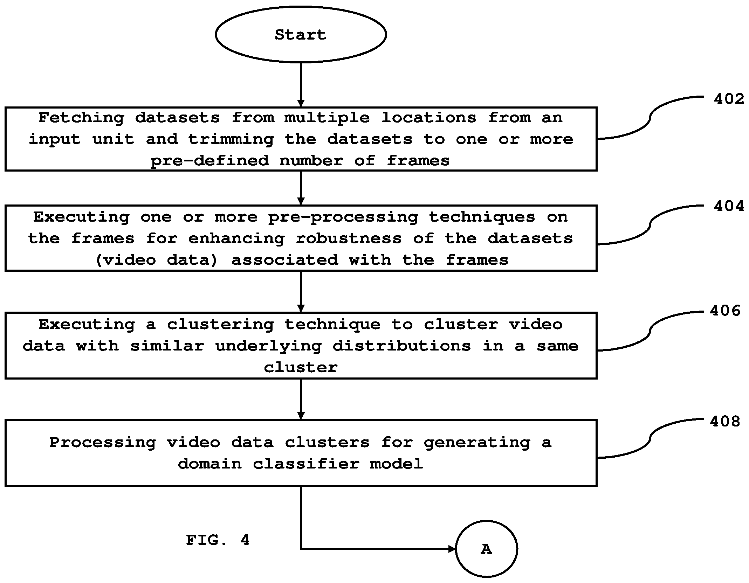

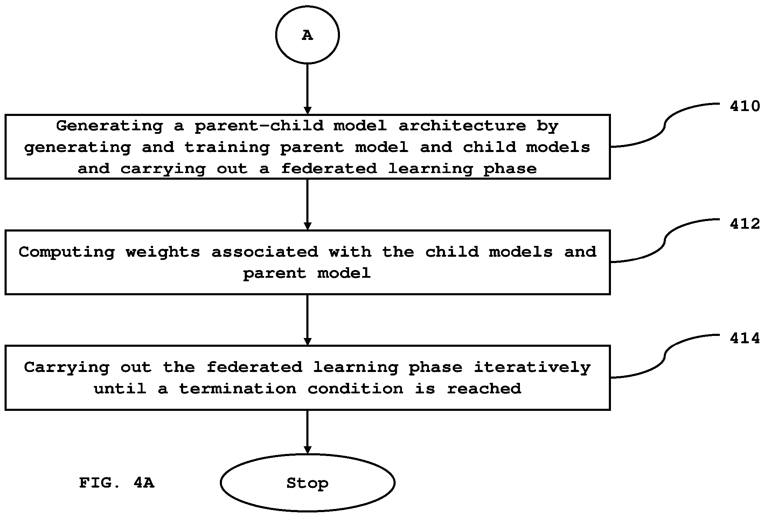

Figs. 4 and 4A illustrates a flowchart depicting a method for generating a federated learning-based model for improved video analytics, in accordance with an embodiment of the present invention.

At step 402, datasets from multiple locations from an input unit are fetched and the datasets are trimmed to one or more pre-defined number of frames. In an embodiment of the present invention, the datasets comprise one or more videos which are captured using video capturing devices, such as, closed-circuit television (CCTV) cameras or the like from various locations. For example, if an event of theft is required to be addressed in retail stores, then the datasets relate to theft and non-theft videos obtained from CCTV cameras installed in retail stores at various locations. In an exemplary embodiment of the present invention, the input unit includes, but is not limited to, databases, and data sources located at different locations. The datasets are stored in the input unit as a set of datasets. In an embodiment of the present invention, the set of datasets (i.e., videos) are trimmed to one or more pre-defined number of frames in order to maintain consistency of the datasets in the set of datasets. In an exemplary embodiment of the present invention, the pre-defined number of frames is 150 frames, which is determined from various empirical and experimental studies.

At step 404, one or more pre-processing techniques are executed on the frames for enhancing robustness of the datasets (video data) associated with the frames. In an embodiment of the present invention, one or more pre-processing techniques are executed on the frames for enhancing robustness of the datasets (video data) associated with the frames. In an embodiment of the present invention, a first pre-processing technique is applied including one or more augmentation techniques. The augmentation techniques include, but are not limited to, flipping, contrasting and brightening of the datasets (video data) associated with the frames. In another exemplary embodiment of the present invention, a second pre-processing technique is applied including one or more CV2 techniques on the frames along with a masking technique to capture a specific incident present in the frames (e.g., movement of persons in the retail store, etc.), and remove irrelevant data from the frames (e.g., location of the aisles in the retail store, etc.). The CV2 techniques include, but are not limited to, background subtraction, dilation, erosion, and morphological operations.

In an embodiment of the present invention, firstly a pre-trained 3DCNN model (e.g., a Movinet-a3-base model) are implemented on the pre-processed frames for extracting features corresponding to video data from the pre-defined number of frames with respect to an event captured in the video frames. For example, the event may include, but is not limited to, theft and non-theft events occurring in one or more of the retail stores at different locations. In an exemplary embodiment of the present invention, a pre-trained 3DCNN model is used for feature extraction, such that each video frame is uniquely represented in a vectorial format. The video data is passed through the pre-trained 3DCNN model to obtain video-specific features in the form of vectors. The vectors uniquely represent the videos, and similar videos have similar features. Further, the pre-trained 3DCNN model consists of a trained frozen feature-extractor part that remains same throughout the video frames. In an embodiment of the present invention, the frozen feature-extractor part is often attached to an edge layer (e.g., a Flatten layer) of the 3D convolution neural network model for transforming the features in a 1-D format to be consumed by a classifier. The features extracted by the pre-trained 3DCNN model corresponding to each video frame act as video-specific meta-data which uniquely define a video. For example, since parent model and child models, trained using federated learning technique, are binary classifiers that categorize videos as either theft or non-theft, the parent model and child models are trained on videos containing both theft and non-theft classes.

At step 406, a clustering technique is executed to cluster video data with similar underlying distributions in a same cluster. In an embodiment of the present invention, a clustering technique is executed on the vectors to cluster video data with similar underlying distributions in a same cluster. In embodiment of the present invention, a hierarchical clustering operation (also referred to as agglomerative clustering) is executed for clustering of similar videos in the one or more clusters, such that each cluster belongs to one underlying distribution. In an example, the underlying distributions refer to the pattern of theft, that may vary from store to store depending on their demography, placement of the isles in the shop, etc. The clustering is carried out based on extracting video-specific features. The video-specific features are extracted by the deep learning model and are in vectorial form. In an embodiment of the present invention, at least three clusters are generated for clustering of similar video data in the clusters based on the video-specific features. Hierarchical clustering is depicted in the form of a dendrogram, which is generated by computing linkage as ward and affinity between data points in the dendrogram by determining Euclidean distance between the data points.

In an embodiment of the present invention, a silhouette score is computed for evaluating correctness of the clustered video data. If the silhouette score is 1, then the video data in a cluster is well-matched to its own cluster and poorly matched to nearby clusters. Further, if the silhouette score is -1, then the video data is in an incorrect cluster. Computation of silhouette score determines correctness of clusters by minimizing the number of video data with score less than a pre-determined threshold score of zero.

At step 408, video data clusters are processed for generating a domain classifier model. In an embodiment of the present invention, the video data clusters for generating a domain classifier model by using clusters as target classes. The domain classifier model categorizes each video in either of the 'n' identified clusters or underlying distributions. Therefore, the target classes for the domain classifier are the clusters. The domain classifier model is a deep learning model which is used to determine probability of domain association of a video to a cluster in which the video is clustered. Therefore, each video's domain association is identified by the domain classifier model, such that the learning process of a child model can be regularized, and the child model does not lose confidence if it makes wrong predictions for videos that do not belong to its distribution.

At step 410, a parent-child model architecture is generated by generating and training parent model and child models and carrying out a federated learning phase. In an embodiment of the present invention, the one or more child models in the parent-child model architecture are connected to the parent model. The parent-child model architecture is generated by firstly initializing parent model data for parent model generation by aggregating a first pre-defined percentage (x%) of video data from each cluster in a stratified manner. The training of the parent model is carried out through the child models, and a pre-determined fraction of overall video data (for example, 25%) from all the distributions collectively is used to train the parent model to initiate training process of the child models. The remaining fraction of the video data is used for keeping a check on the learning process of the parent model by testing the parent model against the rest of the video data at different instances of the federated learning process. The parent model is initialized first based on the aggregated first pre-defined percentage of video data, to prevent the child models from being completely biased towards their respective distributions. In an exemplary embodiment of the present invention, the parent model is generated by using a time distributed Convolutional Neural Network (CNN) technique along with Convolutional Long-Short Term Memory (Conv-LSTM) technique for extracting one or more spatio-temporal features from the video data simultaneously. In an embodiment of the present invention, the parent model is generated using multiple time-distributed CNN layers of the CNN and Conv-LSTM layers of the Conv-LSTM as the feature extractor and dense layers as the classifier. The convolution layers extract the spatial features that are present in a single frame, while the time-distributed layers extract the temporal features i.e., inter-frame features for activity recognition. Further, Conv-LSTM is used to facilitate the parent model to learn on activities spanning across a large number of frames. In an embodiment of the present invention, the generated parent model is trained based on the first pre-defined percentage (x%) of video data aggregated from each cluster. The trained parent model is associated with weights, which relates to knowledge learned by the parent model.

In an embodiment of the present invention, one or more child models are initialized after generating the parent model by using the weights of the parent model. The weights of the parent model are transferred to the child models without any changes where the child model has not seen any video data yet. Therefore, the parent model is initialized first based on the aggregated video data, to prevent the child models from starting a solution completely biased towards their respective distributions. In an embodiment of the present invention, the child models are generated by training on the knowledge, which is learnt by the parent model and one or more invariant features associated with the knowledge that span across the entire distribution of the video data aggregated from each cluster are used apart from one or more variant features associated with the knowledge specific to their distribution. A knowledge distillation (KD) technique is employed for transferring knowledge from the parent model to the child models and the distribution specific features learnt by the child models are simultaneously checks. In an exemplary embodiment of the present invention, the below mentioned equation is used for computing weights of each child model:

$$\text{Updated\_Weights(Child\_i)} = (1 - \gamma) * \text{Weights(Child\_i)}$$
$$+ \gamma * (\text{Weights(Parent)} +$$
$$\text{KD\_Gradients(Child\_i, Parent))}$$

As illustrated above, architecture and weights of the generated parent model is used to train the child models.

In an embodiment of the present invention, a federated learning phase is initiated by training the one or more generated child models based on aggregating a second pre-defined percentage (y%) of video data from each cluster. In an embodiment of the present invention, the trained child models are tested on a third pre-defined percentage (z%) of video data aggregated from each cluster. In another embodiment of the present invention, domain association of the particular video to the cluster in which the video is present is determined by using the third pre-defined percentage (z%) of video data aggregated from each cluster. Testing of the child models is carried out using a fraction of video data belonging to the said domain, which is provided to the trained child model for training and computing a confidence score.

In an embodiment of the present invention, the confidence score for the trained child models is computed by using the below mentioned formula:

$$\text{Confidence score (Child\_i)} = \Sigma \text{ (Correct Predictions within}$$
$$\text{Domain\_i} * \text{Domain association\_i)/}$$
$$\text{Total Predictions\_i}$$

Confidence score represents the confidence of the child model on its own knowledge. The confidence score is computed by using the correct predictions made by the child models for the videos in its own domain. The domain of the videos is identified by the domain classifier.

In an embodiment of the present invention, the model training and evaluation unit 120 employs the generated child models for carrying out a prediction operation for predicting an event associated with a domain (e.g., predicting the event of theft in a retail store). In another embodiment of the present invention, the model training and evaluation unit 120 is configured to carry out a data redistribution operation in clusters for redistributing the videos data in the clusters corresponding to which the child models have made incorrect event predictions. In an example, the child models as well as the domain classifier are tested on the theft and non-theft videos. The video data is placed in a cluster based on the correct prediction made by the child model. If multiple child models make correct predictions, then a domain association value is used to determine clustering of the video data. Therefore, redistribution is carried out to make sure that the child models are learning from the data belonging to their own underlying distribution.

At step 412, weights associated with the child models and parent model are computed. In an embodiment of the present invention, the knowledge gained by the child models specific to their distribution is also used by the parent model to determine global knowledge of all the existing distributions. Further, a knowledge distillation loss is used along with the domain classifier to compute weightage of knowledge corresponding to each child models, which is required to be transferred to the parent model. The weightage of the knowledge of the child models and the existing knowledge of the parent model is computed to update the parent model by using the below mentioned formula, in accordance with an exemplary embodiment of the present invention:

$$\text{Weightage (Child\_i)} = (\alpha * \text{Confidence(Child\_i)} + \beta *$$
$$\text{KD\_Loss(Child\_i, Parent)) / (1 + \Sigma(\alpha *}$$
$$\text{Confidence(Child\_i)} + \beta *$$
$$\text{KD\_Loss(Child\_i, Parent)))}$$

$$\text{Weightage(Parent)} = 1 / (1 + \Sigma(\alpha * \text{Confidence(Child\_i)} +$$
$$\beta * \text{KD\_Loss(Child\_i, Parent)))}$$

In an exemplary embodiment of the present invention, the weightages as mentioned in the above equation are weights that are being computed and does not relate to the weights of the model. The weightages signify the contribution of a model in updating the child model or parent model. For example, if a model is employed with one node in an input layer and two nodes in the output layer, then there will be two edges associated with it, and the model is associated with two weights. Further, if two child models and one parent model are employed on the same architecture, then weights associated with them would be P1, P2 for parent, C11, C12 for child 1 and C21, C22 for child 2. Further, if the weights of the parent model are required to be updated and weightage of parent model is 0.5 and child models are 0.25 each, then the updated weights of the parent model is: P(updated) = (0.5 * P11 + 0.25 * C11 + 0.25 * C21), (0.5 * P12 + 0.25 * C12 + 0.25 * C22). Further, these weightages are calculated using the confidence of the child models.

In an embodiment of the present invention, weights of the parent model are updated by using the below mentioned formula:

Updated Weights(Parent) = Weightage(Parent) * Weights(Parent) + $\Sigma$(Weightage(Child_i) * Weights(Child_i)) The weights of the updated parent model are transferred to the child models corresponding to each cluster. The knowledge gained by the parent model or the child models in federated learning is stored in the form of their weights. As the parent model does not train on the data directly and learns from the knowledge gained by the child models, the knowledge is transferred from the child models in the form of their weights. As such, the knowledge gained by each of the child models may have different importance in context of the parent model. Therefore, a weightage parameter is used for the knowledge of the child models that have more confidence on their predictions.

In an embodiment of the present invention, testing of the generated parent model is performed by aggregating a fourth pre-defined percentage (t%) of video data from each cluster in a stratified manner to test the parent model with older weights and newer weights. Further, the parent model with the updated weights is tested on the pre-determined fraction of video data from each of the clusters formed, and compared against a previous performance. In an embodiment of the present invention, the testing of the generated parent model is carried out based on one or more scenarios. In an embodiment of the present invention, a first scenario includes improvement in overall performance of the parent model after training, but the parent model may be skewed towards particular distributions. Skewness implies that the variant features of some child models are dominant over the invariant features. In order to address the first scenario, the parent model's weights are not updated, and the testing of the parent model is carried out with previous weights. In another embodiment of the present invention, a second scenario includes improvement in overall performance of the parent model after training without being skewed. In order to address the second scenario, the parent model is tested with the updated weights. In yet another embodiment of the present invention, a third scenario includes deterioration in overall performance of the parent model, but improvement in skewness. In order to address the third scenario, the updated weights are used for testing the parent model, as the updated weights result in improvement of skewness, and therefore the invariant features are learnt using the updated weights. In another embodiment of the present invention, a fourth scenario may include deterioration in overall performance of the parent model as well as increase in skewness. In order to address the fourth scenario, the parent model's weights are not updated and uses previous weights for testing of the parent model.

In an embodiment of the present invention, weights of the generated child models are updated by employing the knowledge distillation (KD) technique and implementing the below mentioned formula:

$$\text{Updated\_Weights(Child\_i)} = (1 - \gamma - \eta) * \text{Weights(Child\_i)}$$
$$+ \gamma * \text{Weights(Parent)}$$
$$+ \eta * \text{Average\_Weights(Child\_Models)}$$

where, $\gamma$ and $\eta$ are the hyperparameters.

In an embodiment of the present invention, each child model's weight is updated based on determining at least two factors comprising a confidence factor (Child_i) in which a higher confidence in predictions provides a stronger influence on the update (weighted by $\alpha$) and a KD_Loss (Child_i, Parent) in which the KD loss between the child model and the parent model contributes to the update (weighted by $\beta$). KD loss leads the child models to learn from the parent model's knowledge. Sum of the weighted contributions for all child models ($\Sigma(\alpha$ * Confidence(Child_i) + $\beta$ * KD_Loss(Child_i, Parent))) is used for carrying out a normalization operation. The normalization operation provides a normalized sum for weightage values (Weightage(Child_i)) to 1 for the child models. The child model's weightage (Weightage(Child_i)) is determined by dividing the child models combined confidence and knowledge distillation loss contribution by the normalized sum. The weightage determines the relative influence of each child model on its own update. The parent model's weightage (Weightage(Parent)) is the inverse of the normalized sum used for child models. This ensures that the sum of weightages for all child models and the parent model equals to 1 during the update process. Therefore, the confidence scores are leveraged to emphasize updates for high-confidence child models while incorporating the KD loss to transfer knowledge from the parent model.

At step 414, the federated learning phase is iteratively carried out until a termination condition is reached. In various embodiments of the present invention, the termination condition represents pre-defined number of iterations for which the federated learning phase is executed. Accordingly, the generated parent model learns from the child models and *vice-a-versa.*

Advantageously, in accordance with various embodiments of the present invention, the present invention provides for using knowledge from the pre-trained parent model thereby potentially achieving good performance even with limited local data at child models. The present invention provides for no raw data exchange between the child models and the parent model, thereby ensuring data privacy compliance. The present invention provides for generating the parent-child model architecture in which the child models learn more generalizable features, leading to better performance on unseen data. Also, the generated parent-child model architecture operates efficiently even when local data at child models is limited. Further, the present invention provides for efficient and effective interpretation of the generated parent-child model architecture through the parent model's knowledge. Also, the present invention provides for encoding relationships between entities associated with different domains and further provides finer context for anomaly detection. The child models leverage the knowledge graph during knowledge distillation, thereby learning from the parent model's predictions and further learning from relationships between data points within the knowledge graph, which provides efficient anomaly identification and improved generalizability, especially for complex anomaly patterns.

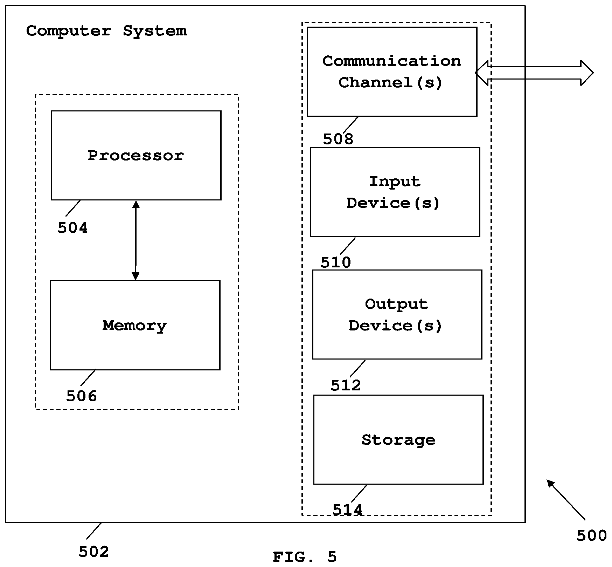

FIG. 5 illustrates an exemplary computer system 500 in which various embodiments of the present invention may be implemented. The computer system 502 comprises a processor 504 and a memory 506. The processor 504 executes program instructions and is a real processor. The computer system 502 is not intended to suggest any limitation as to scope of use or functionality of described embodiments. For example, the computer system 502 may include, but not limited to, a programmed microprocessor, a micro-controller, a peripheral integrated circuit element, and other devices or arrangements of devices that are capable of implementing the steps that constitute the method of the present invention. In an embodiment of the present invention, the memory 506 may store software for implementing various embodiments of the present invention. The computer system 502 may have additional components. For example, the computer system 502 includes one or more communication channels 508, one or more input devices 510, one or more output devices 512, and storage 514. An interconnection mechanism (not shown) such as a bus, controller, or network, interconnects the components of the computer system 502. In various embodiments of the present invention, operating system software (not shown) provides an operating environment for various software executing in the computer system 502 and manages different functionalities of the components of the computer system 502.

The communication channel(s) 508 allows communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, Bluetooth or other transmission media.

The input device(s) 510 may include, but not limited to, a keyboard, mouse, pen, joystick, trackball, a voice device, a scanning device, touch screen or any another device that is capable of providing input to the computer system 502. In an embodiment of the present invention, the input device(s) 510 may be a sound card or similar device that accepts audio input in analog or digital form. The output device(s) 512 may include, but not limited to, a user interface on CRT or LCD, printer, speaker, CD/DVD writer, or any other device that provides output from the computer system 502.

The storage 514 may include, but not limited to, magnetic disks, magnetic tapes, CD-ROMs, CD-RWs, DVDs, flash drives or any other medium which can be used to store information and can be accessed by the computer system 502. In various embodiments of the present invention, the storage 514 contains program instructions for implementing the described embodiments.

The present invention may suitably be embodied as a computer program product for use with the computer system 502. The method described herein is typically implemented as a computer program product, comprising a set of program instructions which is executed by the computer system 502 or any other similar device. The set of program instructions may be a series of computer readable codes stored on a tangible medium, such as a computer readable storage medium (storage 514), for example, diskette, CD-ROM, ROM, flash drives or hard disk, or transmittable to the computer system 502, via a modem or other interface device, over either a tangible medium, including but not limited to optical or analogue communications channel(s) 508. The implementation of the invention as a computer program product may be in an intangible form using wireless techniques, including but not limited to microwave, infrared, Bluetooth or other transmission techniques. These instructions can be preloaded into a system or recorded on a storage medium such as a CD-ROM, or made available for downloading over a network such as the internet or a mobile telephone network. The series of computer readable instructions may embody all or part of the functionality previously described herein.

The present invention may be implemented in numerous ways including as a system, a method, or a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from or offending the scope of the invention.

**EP 4 675 576 A1**

**Claims**

1.  A system for generating a federated learning-based model for improved video analytics, the system comprises:

    a memory storing program instructions;
    a processor executing instructions stored in the memory; and
    a video analytics model generation engine executed by the processor and configured to:

    fetch a set of datasets from an input unit, the datasets comprise video data associated with a domain stored in the input unit, wherein the set of datasets are trimmed to one or more pre-defined number of video frames in order to maintain consistency of the datasets;
    extract features from the pre-defined number of video frames with respect to an event captured in the video frames by employing a pre-trained model on pre-processed video frames, wherein the extracted features are in the form of vectors;
    cluster the video data represented in the pre-defined number of video frames with similar underlying distributions in a same cluster based on the extracted features; and
    generate a parent-child model architecture based on the clustered video data, wherein parent model data is initialized for parent model generation by aggregating a first pre-defined percentage of video data from each of the clusters in a stratified manner, and wherein the one or more child models are initialized after generating the parent model by using weights of the parent model for predicting the event associated with the domain.

2.  The system as claimed in claim 1, wherein the pre-trained model is a 3D convolution neural network model that uniquely represents each of the video frames in a vectorial format, and wherein the pre-trained 3D convolution neural network model comprises a trained frozen feature-extractor part that remains same throughout the video frames, the frozen feature-extractor part is attached to an edge layer of the 3D convolution neural network model for transforming the features in a 1-Dimensional format to be consumed by a classifier.

3.  The system as claimed in claim 1, wherein the video analytics model generation engine comprises a feature extraction unit executed by the processor and configured to generate three clusters for clustering of similar video data based on the extracted features, and wherein the feature extraction unit computes a silhouette score for evaluating correctness of the clustered video data, and wherein if the silhouette score is determined to be '1' then it is ascertained that the video data in a cluster is well-matched to its own cluster and poorly matched to nearby clusters, and if the silhouette score is determined to be '-1' then the video data is determined to be in an incorrect cluster, and wherein the computation of silhouette score determines correctness of clusters by minimizing video data with a score less than a pre-determined threshold score of zero.

4.  The system as claimed in claim 1, wherein the video analytics model generation engine comprises a data initialization and model generation unit executed by the processor and configured to process the video data clusters for generating a domain classifier model by employing clusters as target classes, and wherein the domain classifier model categorizes each of the video data in either of 'n' identified clusters or underlying distributions, and wherein the domain classifier model is a deep learning model which is used to determine probability of domain association of a video to a cluster in which the video data is clustered, and wherein the data initialization and model generation unit carries out training of the parent model through the child models by employing a pre-determined fraction of overall data from all the distributions collectively to train the parent model and subsequently initiates the training process of the child models, and wherein a remaining fraction of the video data is used for keeping a check on the learning process of the parent model by testing the parent model against rest of the video data at different instances of the federated learning process.

5.  The system as claimed in claim 4, wherein the data initialization and model generation unit initializes the parent model based on the aggregated first pre-defined percentage of video data to prevent the child models from being completely biased towards their respective distributions, and wherein the parent model is generated by using: a time distributed Convolutional Neural Network (CNN) technique along with Convolutional Long-Short Term Memory (Conv-LSTM) technique for extracting one or more spatio-temporal features from the video data simultaneously, and by using multiple time-distributed CNN layers of the CNN and Conv-LSTM layers of the Conv-LSTM as the feature extractor and dense layers as the classifier, and wherein the convolution layers extract the spatial features that are present in a single frame while the time-distributed layers extract the temporal features for activity recognition.

6.  The system as claimed in claim 1, wherein the video analytics model generation engine comprises a model training and evaluation unit that trains the generated parent model based on the first pre-defined percentage of video data aggregated from each cluster, and wherein the trained parent model is associated with weights which are associated with knowledge learned by the parent model, and wherein the weights of the parent model are transferred to the child models without any changes.

7. The system as claimed in claim 1, wherein the video analytics model generation engine comprises a data initialization and model generation unit that generates the child models by training on the knowledge which is learnt by the parent model including one or more invariant features associated with the knowledge that span across the entire distribution of the video data aggregated from each cluster apart from one or more variant features associated with the knowledge specific to their distribution, and wherein a knowledge distillation technique is employed for transferring knowledge from the parent model to the child models, and wherein distribution specific features learnt by the child models are simultaneously checked.

8. The system as claimed in claim 1, wherein the video analytics model generation engine comprises a model training and evaluation unit which initiates a federated learning phase by training one or more generated child models by aggregating a second pre-defined percentage of video data from each cluster, and wherein the trained child models are tested on a third pre-defined percentage of video data aggregated from each cluster, and wherein a domain association of the particular video to the cluster in which the video is present is determined by using the third pre-defined percentage of video data aggregated from each cluster, and wherein testing of the child models is carried out using a fraction of video data belonging to the domain which is provided to the trained child model for training and computing a confidence score to predict the event associated with the domain, and wherein the model training and evaluation unit carries out a data redistribution operation on clusters for redistributing the video data in the clusters based on incorrect event predictions made by the child models, and placing the video data in the clusters based on correct event predictions made by the child models, and wherein if it is determined that multiple child models make correct predictions then a domain association value is used to determine clustering of the video data.

9. The system as claimed in claim 1, wherein the video analytics model generation engine comprises a model training and evaluation unit for computing weights associated with the child models and parent model, and wherein knowledge gained by the child models specific to their distribution is used by the parent model to determine global knowledge of all existing distributions, and wherein a knowledge distillation loss is used along with a domain classifier to compute weightage of knowledge corresponding to each child models which is required to be transferred to the parent model, wherein the weightage of the knowledge of the child models and the existing knowledge of the parent model is computed by the model training and evaluation unit to update the parent model.

10. The system as claimed in claim 9, wherein the model training and evaluation unit updates weights associated with the generated child models by determining two factors comprising: a confidence factor in which a higher confidence in predictions provides a stronger influence on the update, and a knowledge distillation loss between the child models and the parent model.

11. A method for generating a federated learning-based model for improved video analytics, the method is implemented by a processor executing instructions stored in a memory, the method comprises:

fetching a set of datasets from an input unit, the datasets comprise video data associated with a domain stored in the input unit, wherein the set of datasets are trimmed to one or more pre-defined number of video frames in order to maintain consistency of the datasets;
extracting features from the pre-defined number of video frames with respect to an event captured in the video frames by employing a pre-trained model on pre-processed video frames, wherein the extracted features are in the form of vectors;
clustering video data represented in the pre-defined number of video frames with similar underlying distributions in a same cluster based on the extracted features; and
generating a parent-child model architecture based on the clustered video data, wherein parent model data is initialized for parent model generation by aggregating a first pre-defined percentage of video data from each of the clusters in a stratified manner, and wherein the one or more child models are initialized after generating the parent model by using weights of the parent model for predicting the event associated with the domain.

12. The method as claimed in claim 11, wherein the step of generating the parent-child architecture comprises training the parent model through the child models by employing a pre-determined fraction of overall data from all the distributions collectively and subsequently initiating training of the child models, and wherein remaining fraction of the video data is used for keeping a check on the learning process of the parent model by testing the parent model against the rest of the video data at different instances of the federated learning process.

13. The method as claimed in claim 11, wherein the step of generating parent-child architecture comprises generating the child models by training on the knowledge which is learnt by the parent model including one or more invariant features associated with the knowledge that span across the entire distribution of the video data aggregated from each cluster apart from one or more variant features associated with the knowledge specific to their distribution; transferring knowledge from the parent model to the child models; and simultaneously checking distribution specific features learnt by the child models.

14. The method as claimed in claim 11, wherein the step of generating parent-child architecture comprises of initiating a federated learning phase by training one or more generated child models by aggregating a second pre-defined percentage of video data from each cluster; testing the trained child models on a third pre-defined percentage of video data aggregated from each cluster, and wherein a domain association of the particular video to the cluster in which the video is present is determined by using the third pre-defined percentage of video data aggregated from each cluster, and wherein testing of the child models is carried out using a fraction of video data belonging to the domain which is provided to the trained child model for training and computing a confidence score to predict the event associated with the domain, and wherein a data redistribution operation is carried out on the clusters for redistributing the video data in the clusters based on incorrect event predictions made by the child models, and placing the video data in the clusters based on a correct event prediction made by the child model, wherein if it is determined that multiple child models make correct predictions then a domain association value is used to determine clustering of the video data.

15. The method as claimed in claim 14, wherein knowledge gained by the child models specific to their distribution is used by the parent model to determine global knowledge of all existing distributions, and wherein a knowledge distillation loss is used along with a domain classifier to compute weightage of knowledge corresponding to each of the child models which is required to be transferred to the parent model, wherein the weightage of the knowledge of the child models and the existing knowledge of the parent model is computed to update the parent model.

Video Analytics Model Generation Subsystem 102

FIG. 1

FIG. 2

FIG. 3A

FIG. 3B

FIG. 3C

EP 4 675 576 A1

FIG. 3D

Start

402 — Fetching datasets from multiple locations from an input unit and trimming the datasets to one or more pre-defined number of frames

404 — Executing one or more pre-processing techniques on the frames for enhancing robustness of the datasets (video data) associated with the frames

406 — Executing a clustering technique to cluster video data with similar underlying distributions in a same cluster

408 — Processing video data clusters for generating a domain classifier model

A

FIG. 4

( A )

Generating a parent-child model architecture by
generating and training parent model and child models
and carrying out a federated learning phase — 410

Computing weights associated with the child models and
parent model — 412

Carrying out the federated learning phase iteratively
until a termination condition is reached — 414

FIG. 4A

( Stop )

FIG. 5

| Europäisches Patentamt European Patent Office Office européen des brevets | **EUROPEAN SEARCH REPORT** | Application Number EP 25 15 3785 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TU NGUYEN ANH ET AL: "FedFSLAR: A Federated Learning Framework for Few-shot Action Recognition", 2024 IEEE/CVF WINTER CONFERENCE ON APPLICATIONS OF COMPUTER VISION WORKSHOPS (WACVW), IEEE, 1 January 2024 (2024-01-01), pages 270-279, XP034589010, DOI: 10.1109/WACVW60836.2024.00035 [retrieved on 2024-04-16] * abstract * * Section 3; figure 1 * | 1-15 | INV. G06V20/52 G06V20/40 G06N3/045 G06N3/098 |
| A | WAN FAN ET AL: "Community-Aware Federated Video Summarization", 2023 INTERNATIONAL JOINT CONFERENCE ON NEURAL NETWORKS (IJCNN), IEEE, 18 June 2023 (2023-06-18), pages 1-8, XP034387608, DOI: 10.1109/IJCNN54540.2023.10191101 [retrieved on 2023-08-02] * abstract * * Section III; figure 1 * | 1-15 | |
| A | JOHN NGUYEN ET AL: "Where to Begin? On the Impact of Pre-Training and Initialization in Federated Learning", ARXIV.ORG, CORNELL UNIVERSITY LIBRARY, 201 OLIN LIBRARY CORNELL UNIVERSITY ITHACA, NY 14853, 24 March 2023 (2023-03-24), XP091468404, * abstract * * Section 3.2 * | 1-15 | |

TECHNICAL FIELDS
SEARCHED (IPC)

G06V
G06N

The present search report has been drawn up for all claims

| Place of search | Date of completion of the search | Examiner |
|---|---|---|
| The Hague | 31 March 2025 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)